# EUROPEAN PATENT SPECIFICATION

(11) **EP 4 159 622 B1**
(45) Date of publication and mention of the grant of the patent: **09.09.2026**
(21) Application number: 21200321.4
(22) Date of filing: 30.09.2021
(51) Int. Cl.: B64D 9/00, B65D 88/14, B65D 19/40, B64C 1/20

(54) **LOADING SYSTEM FOR LOADING CARGO SUPPORT MEMBERS IN THE PASSENGER CABIN OF AN AIRCRAFT**
LADESYSTEM ZUM LADEN VON FRACHTTRAGELEMENTEN IN DER PASSAGIERKABINE EINES FLUGZEUGS
SYSTÈME DE CHARGEMENT POUR CHARGER DES ÉLÉMENTS DE SUPPORT DE CHARGE DANS LA CABINE DE PASSAGERS D'UN AÉRONEF

(43) Date of publication of application: 05.04.2023
(73) Proprietor: Airbus Operations GmbH, 21129 Hamburg (DE)
(72) Inventor: Meiranke, Dirk, 21129 Hamburg (DE); Schliwa, Ralf, 21129 Hamburg (DE); Grabow, Thomas, 21129 Hamburg (DE); Benthien, Hermann, 21129 Hamburg (DE); Poppe, Andreas, 21129 Hamburg (DE)
(74) Representative: Bird & Bird LLP - Hamburg

(56) References cited:
- EP-A1- 3 006 337
- EP-A1- 3 845 417
- WO-A1-00/66463
- JP-A- 2011 116 451
- RU-C1- 2 088 477
- US-A- 5 752 673
- US-B2- 8 561 946

## Description

The present invention relates to a loading system for cargo elements, a support assembly, a base element for a cargo container, a cargo container and a rail assembly.

JP 2011 116451 A relates to a desire for an air cargo container which is simple and lightweight so as to be movable by human power.

US 5 752 673 A describes an aircraft in which the lower deck floor is depressed or dropped in a certain area to form an aisle.

WO 00/66463 A1 describes a storage system for goods on pallets.

EP 3 006 337 A1 provides a cargo management system having a slide bushing supported cargo shuttle.

RU 2 088 477 C1 describes an aviation equipment for container transportation of goods.

US 8 561 946 B2 relates to a method and apparatus to increase clearance of a cargo area of an aircraft.

EP 3 845 417 A1 provides a disclosure of cargo restraint systems, specifically related to aircraft cargo restraint systems.

Cargo containers are generally known from the prior art such as the from DE 10 2020 110 598 A1. These containers comprise a preferably stiff base member having an upper surface which is adapted to receive cargo.

In this context cargo in the sense of the present invention is to be understood broadly and includes both luggage and heavy cargo elements which are usually received within the cargo hold of an aircraft. Moreover, in the present case the containers in accordance with the present invention are dimensioned such that they are capable to be passed through both the doors to the passenger cabin and the cargo hold. In particular, the term container in the sense of the present invention must not be construed in such a narrow sense so as to cover only those containers which are normally received in the cargo hold of an aircraft.

That the containers of the present invention shall also be capable of being received in the cabin of an aircraft is driven by the fact that it has recently turned out that a more flexible use of an aircraft is desirable where at least parts of the cabin can be converted into cargo space by removing the respective seats, when the complete capacity for passengers is not required. In those cases, the space in the cabin no longer required for passengers can be used for cargo so that the overall cost efficiency may still be kept at a higher level, even though a lower number of passengers are carried by the aircraft.

Since it is intended, that the containers of the present invention are adapted such, that they may be received both in the cargo hold and in the cabin, specific measures need to be taken to allow for the containers to be slid along the floor surface of both the cargo hold and the cabin. In particular, in case of the latter it is to be considered that the maximum pointloads which can be applied to the cabin floor are limited and much smaller than in case of the floor of the cargo hold. Furthermore, whereas normally special means are provided or are installed within the cargo hold that allow for a powered and controlled movement of the containers within the hold, this is not the case in the cabin. Hence, it is required to provide means on the base element of the containers and the floor of the passenger cabin that allow for an easy shifting of the containers on the floor surface of the cabin. In particular, it is desirable that containers may manually be shifted within the cabin. However, it is still required that the passenger cabin of the aircraft can be used in a normal manner, so that the system needs to be designed such that it does not prevent a simple assembly and disassembly of seat rows in therein.

Therefore, it is the object of the present invention to provide a system for loading cargo elements into the passenger cabin of an aircraft, the system comprising an assembly of engagement elements to be installed on the floor of the cabin and a support assembly to be mounted on cargo elements, wherein the system is adapted such that cargo elements can manually be positioned within the passenger cabin that the seat rows can still easily be installed within the cabin.

In a first aspect this object is achieved by a support assembly comprising a base member assembly having a support surface adapted to define a common support plane and a plurality of slots wherein each of the slots extends from the support surface into the base member assembly and linearly along a longitudinal axis,
wherein the base member assembly is configured such that the slots of the plurality of slots can be arranged in parallel to each other wherein in each of the slots at least one support member is slidably mounted which comprises an engagement surface pointing towards the support surface wherein the support member can be moved within the slot between a locking position and a releasing position, and
wherein in the release position the distance measured perpendicular to the support surface between the engagement surface and the support surface is smaller than in the locking position,
wherein the base member assembly further comprises an actuation assembly coupled to each of the support members and having an actuation member that can be positioned in a locked position and in a release position, the actuation assembly being configured such that
when the actuation member is positioned in the release position, each of the support members is positioned in the releasing position and
when the actuation member is positioned in the locked position, each of the support members is positioned in the locking position.

The support assembly according to the present invention can be mounted on or be part of cargo support members. The term "cargo support member" in the sense of the present invention covers any kind of assembly onto which cargo may positioned during transport such as cargo containers or palettes. The base member assembly may include one or more base members, which can either be separate elements which are to be independently fixed on the cargo support member, or the base member assembly may be formed as a sole element that may be fixed to the cargo support member or is integrally formed therewith.

In any of these forms the base member assembly defines by a support surface provided on the assembly a common support plane, which when the assembly is mounted on or being part of a cargo support member that is arranged in the passenger cabin points to the floor surface thereof.

The base member assembly, e.g. one or more base members, is provided with a plurality of slots each of which extends from the support surface into the base member assembly and linearly along a longitudinal axis. The support assembly of the present invention is configured such that when the support assembly is arranged on or is part of a cargo support member, the longitudinal axes of the slots extend in parallel to each other. In each of the slots one or more support elements are mounted each of which comprises an engagement surface pointing towards the support surface. The support members are slidable, so that they may conduct a linear or a rotational movement within the slot between a locking position and a releasing position. In the releasing position the distance measured perpendicularly to the support surface between the engagement surface and the support surface is smaller than in the locking position. This applies to each of the support members of support assembly.

Finally, the support assembly according to the present invention is provided with an actuation assembly coupled to each of the support members and comprising an actuation member that can be operated by a user such as personnel handling a cargo support member being provided with the support assembly within the cabin of an aircraft. The actuation member can be actuated such that it can assume a locked position and a release position wherein the actuation assembly is configured such that when the actuation member is positioned in the release position, each of the support members are positioned in the releasing position and when the actuation member is positioned in the locked position, each of the support members are positioned in the locking position.

Hence, according to the present invention the support assembly comprises an actuation assembly that is capable of moving the at least one support member in each of the slots from a locking position to a releasing position by adjusting the actuating member of the actuation assembly. When the actuation member is in its release position, each of the support members protrudes to a larger extent into the slot and its engagement surface is closer to the support surface on base member assembly. When the support members are in such position, they may abut or engage with roller members that are received in the slots and arranged along lines on the floor surface of the cabin, the lines being parallel and having the same distance from each other as the slots of the support assembly. This engagement results in lifting the cargo element on which the support assembly is mounted so that the support surface of the base member assembly is no longer in contact with either the floor surface or any other surface on members fixed to the floor so that the cargo element may easily be slid due to the fact that merely the roller members are contact with the cargo element.

When the actuation member is switched to the locked position each of the support members is retracted further into the slots so that the distance between its engagement surface and the support surface on the base member assembly increases with the effect that the support members no longer engage with the roller members and the cargo support member is lowered so that its support surface comes into contact with the floor surface or any other surface of members fixedly arranged on the floor. Such contact prevents the cargo element from being easily slit over the floor.

Hence, the support assembly according to the present invention allows to easily shift cargo support members across the floor of a cabin but also provides for the possibility to lock the cargo elements in place. In addition, it merely requires that roller members are arranged in parallel lines on the floor surface of the passenger cabin of the aircraft. Such lines of roller members can easily be mounted in the seat rails present anyway in the passenger cabin, as will be explained in detail below.

In a preferred embodiment, the actuation assembly comprises a plurality of actuation rods and each of the slots is associated with one of the plurality of actuation rods with said one actuation rod extending parallel to said slot and being movable parallel to said slot between a first and a second position, wherein each actuation rod is coupled with the at least one support member mounted in the slot associated with said actuation rod such that when said actuation rod is in the first position, the at least one support member is in the releasing position and when said actuation rod is in the second position, the at least one support member is in the locking position, and wherein the actuation assembly is configured such that each of the plurality of actuation rods is in the first position, when the actuation member is in the release position and that each of the plurality of actuation rods is in the second position, when the actuation member is in the locked position. Such arrangement with actuation rods extending parallel to the slots in which the at least one support member and preferably the plurality of support members being distributed along the slot are positioned, provides for a mechanically simple solution to effect synchronous movement of the support members. In particular, it is conceivable that the plurality of rods are coupled to a lever member being pivotably mounted on the base member assembly wherein the pivot movement of the lever member results in the sliding movement of the plurality of rods. In such arrangement, the lever member forms the actuation member of the actuation assembly in the sense of the present invention and different pivot positions of the lever member are associated with the locked position and the release position.

In a further preferred embodiment, each of the actuation rods comprises at least one first wedge member and each support member comprises a second wedge member, wherein the at least one first wedge member on one of the plurality of actuation rods engages with the at least one second wedge member on the support member mounted in the slot which is associated with said one of the actuation rods. Such arrangement of wedge members on both the actuation rods and the support members forms a simple mechanical solution to convert the linear movement of the actuation rods into a movement of the support members perpendicular to the longitudinal axis of the rods.

Furthermore, it is preferred when in each of the plurality of slots a plurality of support members is slidably mounted. In such arrangement it is not required that a sole support member extending almost along the entire length of the slots has to be moved between the locking and releasing positions. Instead, in this preferred embodiment it is sufficient that only small elements are shifted. In an embodiment, where in each of the plurality of slots a plurality of slidable support members are provided, it is further preferred when each of the plurality of support members arranged in one of the plurality of slots comprises a second wedge member and wherein the actuation rod associated with said one of the plurality of slots comprises a plurality of first wedge members, wherein the second wedge member of each of said plurality of support members engages with one of the plurality of first wedge members. By such arrangement employing wedge members on both the actuating rod and the support members the movement of the support members within the slots can easily be obtained.

In a further aspect of the present invention a base element for a cargo container is provided, the base element comprising a support assembly according to one or more of the aforementioned embodiments wherein the longitudinal axes of each of the slots are arranged in parallel to each other. A cargo container with such base element may easily be shifted along the floor surface of a passenger cabin being provided with lines of roller members as already described in relation to the above aspect of a base member assembly according to the present invention. In particular, the base element with the support assembly of the present invention may be provided on a cargo container having a support surface which is configured to receive cargo, the cargo support surface being arranged such that it faces away from the support surface of the support assembly. In this regard the term cargo containers in the sense of the present invention is to be construed broadly, i.e. the container may comprise a rigid or flexible housing surrounding and defining a receiving space for a cargo that extends away from the cargo support surface. However, the term cargo container shall also cover those types of containers that are merely provided with fixation means for cargo elements arranged on the support surface of the base element and have a flexible cover member to be placed on the cargo element.

In a further aspect of the present invention a loading system for cargo elements comprising a rail assembly is provided which is adapted to be installed in the floor of a passenger cabin of a vehicle, in particular an aircraft, comprising a plurality of rail members, each of the plurality of rail members extending linearly along a longitudinal axis and comprising a rail support surface, wherein the rail members are configured such that they can be arranged adjacent to each other on the floor of the passenger cabin with their longitudinal axes being parallel and the rail support surface extending in a common plane, wherein on each of the plurality of rail members a plurality of roller members is rotatably mounted such that each of the roller members may rotate about an axis that extends perpendicular to the rail member on which said roller member is arranged and parallel to the plane defined by the rail members, wherein on each one of the plurality of rail members the ball members are distributed along the longitudinal axis of said one rail member, and wherein each of the ball members project beyond the rail support surface by an offset.

Accordingly, the rail members of such rail assembly comprise a plurality of roller members such as rotatably supported ball elements or cylindrical rollers, each roller member being rotatably mounted on the rail members about axes that extend perpendicular to the rail member, i.e. perpendicular to the longitudinal axis of the rail members, and additionally parallel to the plane defined by the plurality of rail members of the rail assembly. A rail assembly according to this aspect can be combined with cargo support members having support assemblies of the first aspect of the present invention and being arranged with the slots in the base member assembly extending parallel to each other with a spacing corresponding to the spacing of the rail members of the rail assembly. The roller members may then project into the slots and abut on the support members when the latter are in the releasing positions. In such case the cargo support member may easily be shifted along the rail members while they are locked relative thereto when the support members are retracted and in their respective locking positions.

In particular, on each one of the plurality of rail members the roller members are, preferably equally, spaced from one another along the longitudinal axis of said one rail member wherein on each one of the plurality of rail members the roller members project beyond the rail support surface by an offset which is identical for each roller member. Such arrangement ensures that a cargo support element supported on the rail assembly is supported in the same way and with the same gap over its entire support surface.

Furthermore, it is preferred when each of the plurality of rail members comprises a fixed locking projection extending beyond the rail support surface. Such locking projection may engage with the corresponding recess which is formed when one of the plurality of support members is in its retracted locking position. Such positive engagement will further prevent the cargo support member from being slid along the rails members when the support members of the support assembly are in their locking positions.

In a further aspect of the present invention the above object is achieved by a loading system comprising a support assembly of one or more of the above embodiments of the first aspect and being arranged on a cargo support member with the longitudinal axis of the slots being arranged in parallel and spaced from each other by a spacing, and an embodiment of the aforementioned rail system with the rail members being arranged adjacent to each other with their longitudinal axes being parallel and the rail support surface extending in a common plane, wherein the rail members are spaced from each other by the spacing.

In such a loading system the rail members of the rail assembly with which the floor surface in the cabin of an aircraft is provided are arranged such that the roller members provided on the rail members may project into the slots of the support assembly on the cargo support element resulting in the latter being slidable along the rail members when the support members are in the releasing position.

In particular, as already indicated above the cargo support member may preferably be formed as a base element for a cargo container or a cargo container comprising a base element on which the support assembly is mounted or into which it is integrated.

In particular, the cargo support member and the rail assemblies of such a system are configured such that for each support member in the locking position the distance measured perpendicularly to the support surface between the engagement surface and the support surface is larger than the offset with which each of the roller members projects beyond the rail support surface and wherein for each support member in the releasing position the distance measured perpendicularly to the support surface between the engagement surface and the support surface is smaller than the offset with which each of the roller members projects beyond the rail support surface.

With such configuration it is ensured that when the support members are in the releasing position, there is a gap between the support surface on the base member assembly and the rail support surface of the rail assembly. Due to the abutment of the roller members of the rail assembly with the support members in this position, the cargo transport element can easily be shifted along the rail members. However, when the support members are in the locking position there is no such gap and the rail support surface on the rails and the support surface on the base member assembly abut on each other effectively preventing a movement.

In the following the present invention will be in the described with reference to a drawing which depicts merely preferred embodiments.
- Figure 1: shows an aircraft having a passenger cabin and a cargo hold the cabin being in the form to be used with embodiments of a loading system of the present invention;
- Figure 2: shows a perspective view of a cargo container comprising a support assembly of a first embodiment of a loading system according to the present invention;
- Figure 3: shows a first cross-sectional view through a rail member and the base element of the container of figure 2 with the support members being in the releasing position;
- Figure 4: shows a second cross-sectional view through a rail member and the base element of the container of figure 2 with the support members being in the locking position;
- Figure 5: shows a third cross-sectional view through a rail member and the base element of the container of figure 2 with the support members being in the locking position;
- Figure 6: shows a cross-sectional view through a rail member and the base member mounted on a cargo support member provided with a base member being part of a second embodiment of a support assembly according to the present invention;
- Figure 7: shows a cross-sectional view through a rail member and the base element of a container being provided with a third embodiment of a support assembly according to the present invention with the support members being in the locking position; and
- Figure 8: shows a cross-sectional view through a rail member and the base element of a container being provided with a fourth embodiment of a support assembly according to the present invention with the support members being in the locking position.

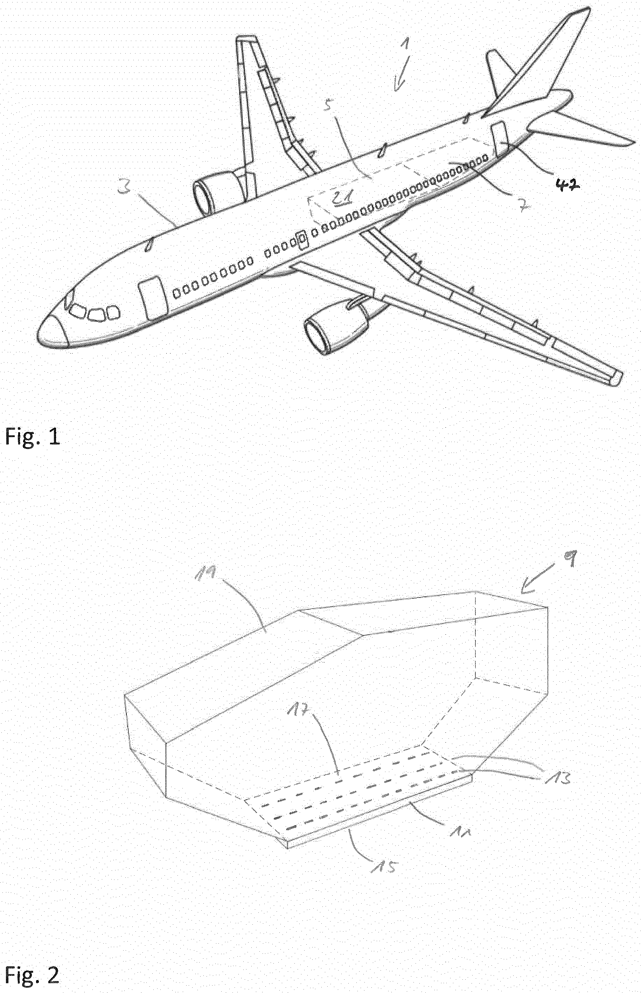

As can be seen in Figure 1 an aircraft 1 usually comprises a fuselage 3 having a passenger cabin 5 as well as a cargo hold 7 below the cabin 5. As outlined above, it is desirable that cargo support members such as cargo containers or cargo palettes are not only stored within the cargo hold 7 but that also in the passenger cabin 5 of the aircraft 1, after having removed at least part of the seat rows in the cabin, may be used for such purpose. Therefore, the embodiments of cargo containers 9 or other cargo support members as described below will have to be dimensioned such that they are able to pass both the passenger door and a cargo door (not shown).

Furthermore, since at least the passenger cabin 5 is normally not provided with any means on its the floor surface to enable transport of cargo containers, it is required that the cabin 5 and these cargo support members are provided with specific means so as to facilitate movement or shifting of the cargo support members along the floor surface of the passenger cabin 5 by personnel.

To this end the cargo container 9 shown in figure 2, comprises a support assembly according to an embodiment of the present invention, the support assembly being integrated in the base element 11 of the cargo container 9. In particular, as can be seen in figure 2 the base element 11 comprises a plurality of slots 13 that extend from a lower surface 15 of the base element 11 into the latter. The slots 13 extend linearly and in parallel to each other, each slot 13 defining a longitudinal axis, and the slots 13 are spaced from each other by a common distance. In figure 2 only three slots are shown but it is within the scope of the present invention that the number of slots 13 may vary depending on the size and the maximum weight of the base element 11 of the cargo container 9 in question.

Furthermore, as it is apparent from figure 2 the base element 11 is also provided with an upper surface 17 which is adapted to carry cargo elements such as luggage or other heavy elements. Moreover, in this preferred embodiment the cargo container 9 comprises a rigid housing 19 which encompasses a receiving space into which the cargo elements are received.

However, in this regard it is to be noted that the term "cargo" in the sense of the present invention is to be construed broadly so that it covers any kind of cargo elements that may be transported by an aircraft independent of its size of the weight.

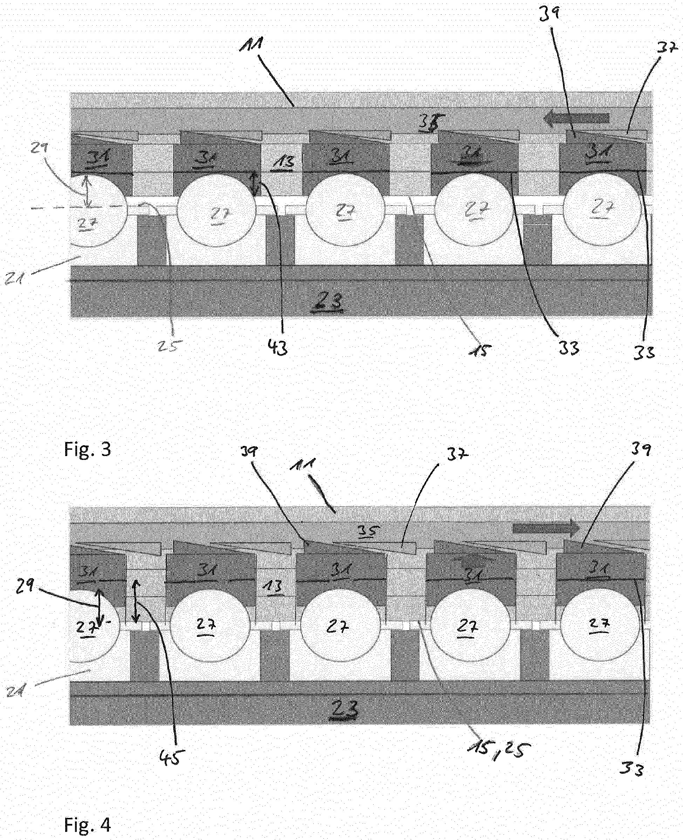

The details of the support assembly of the container 9 of figure 2 are shown in figures 3, 4 and 4 showing cross-sections the base element 11 along one of the slots 13. In addition to the base element 11 these figures also show one of the plurality of rail members 21 arranged in the floor 23 of the passenger cabin 5 of the aircraft 1 in parallel to each other with the same spacing as the slots 13 in the base element 11 of the cargo container 9, with the rail members 21 forming a rail assembly which is also part of the embodiment of a loading system to which the support assembly also belongs.

The rail members 21 define a rail support surface 25 which may extend in the same plane as the floor surface of the floor 23 of the passenger cabin 5. The rail members 21 are provided with a plurality of ball members 27 which are supported in the rail members 21 in such a manner, that the ball members 27 may freely rotate. Furthermore, each of the ball members 27 is arranged in such a manner, that they extend beyond the rail support surface 25 by an essentially identical offset 29, and they are equally spaced from each other along the longitudinal axis of the rail member 21.

In this preferred embodiment the rail members 21 are provided with ball members 27 that may freely rotate relative to the rail members 21. However, according to the present invention it is sufficient when the rail members 21 are provided with roller members that are merely rotatable about axes that extend perpendicular to the longitudinal axis of the rail members and parallel to the plane defined by the rail support surfaces 25, since it is merely required that the rotatably supported roller members on the rail members facilitate the sliding movement of a flat element along the longitudinal axis of the rail members.

Furthermore, it is to be noted that the rail members 21 may be formed as well-known seat support rails such as so-called "Douglas Rails" having a continuous slot in the upper surface extending along the entire length of the rail with spaced semi-circular shaped recesses projecting laterally to each side of the slot. In the region of the latter recesses the ball members 27 may be placed.

As it is shown in figures 3 to 5 in the slots 13 provided in the base element 11 of the cargo container 9 a plurality of support members 31 are arranged which are slidable perpendicular to the longitudinal axis defined by the slot 13 and also perpendicular to the plane defined by the lower surface 15 of the base element 11. In this regard it is to be noted that the lower surface 15 of the base element 11 defines a support surface adapted to define a common support plane. The support member 31 may move towards and away from the lower surface 15 of the base element 11, and in this preferred embodiment the support members 31 may conduct a linear movement but it is also conceivable that the support members 31 follow an arcuate path.

The support members 31 comprise an engagement surface 33 that points towards the lower surface 15 of the base member 11 and by the sliding movement of the support members 31 the distance measured perpendicularly to the lower surface 15 between the engagement surface 33 and the lower surface 15 can be varied.

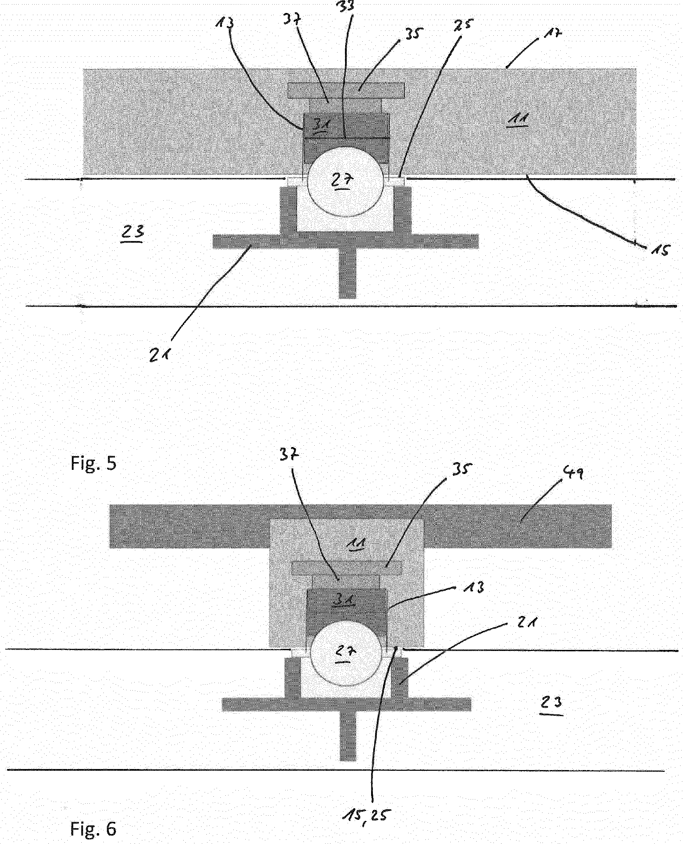

In particular, by comparing figures 3 and 4, it can be seen that the support members 31 can be shifted between a release position (see figure 3) and a locking position (see figures 4 and 5) wherein in the release position the distance between the engagement surface 33 of each of the support members 31 and the lower surface 15 is smaller than in case the support members 31 are in the locking position as shown in figure 4.

Movement of the support members 31 between the releasing position and the locking position is effected by an actuation assembly which in the preferred embodiment described in the following comprises actuation rods 35 that extend parallel to the slots 13 and in particular parallel to the longitudinal axes defined by the slots 13.

The actuation rods 35 are slidably supported within the base element 11 and may be shifted parallel to the slots 13 and parallel to the longitudinal axes of the actuation rods 35 between first and second positions. Each of the actuation rods 35 comprises a plurality of first wedge members 37 which are fixed to the rods 35. Each of the support members 31 is provided with a second wedge member 39 and the first wedge members 37 are arranged in such a manner on the actuation rods 35 that they may engage with one of the second wedge members 39 fixed to the support members 31. Due to the engagement between the wedge members 37, 39 the support members 31 are pushed towards the release position, i.e., towards the lower surface 15 of the base element 11, when the actuation rods 35 are moved towards the first position. In contrast, when the actuation rods 35 are shifted towards the locking position (see figure 4), the engagement of the wedge members 37, 39 permits the support members 31 to slide into the slots 13 and further away from the lower surface 15 of the base element. Hence, by shifting the actuation rods 35 between the first and second positions the support member 31 can be shifted.

Movement of the actuation rods 35 the base element 11 is effect with a pivotable lever 41 one end of which is coupled to an end of each of the actuation rods 35 that extends beyond an edge of the base element 11 so that by means of the lever 41 the position of the rods 35 can be changed. In particular, the lever 41 forms an actuation member and when the lever 41 is in a release position, e.g., pivoted away from the base element 11, the actuation rods 35 are in their respective first positions so that the support members 31 are pushed towards their respective releasing position with the engagement surface 33 closer to the lower surface 15 of the base element 11. In turn, when the lever 41 is pivoted towards the base element 11 and assumes a locked position, the rods 35 are shifted into their second position which effects that the support members may slide further into the slots 13 so that the engagement surfaces 33 are also a retracted from the lower surface 15.

Thus, the combination of the actuation rods 35 and the lever 41 forms an actuation assembly which is coupled to each of the support members 31 with the lever 41 forming an actuation member. This actuation assembly is configured such that when the actuation member is positioned in the release position, each of the support members 31 is positioned in the releasing position and when the actuation member is positioned in the locked position, each of the support members 31 is positioned in the locking position, i.e., with the actuation member the plurality of support members 31 may be shifted between the releasing and locking positions.

Finally, as can be seen in figures 3 and 4, the support members 31 are configured such that when they are in the releasing position (figure 3), the first distance 43 between their engagement surfaces 33 and the lower surface 15 of the base element 11 is smaller than the offset 29 with which the ball members 27 project beyond the rail support surface 25 on the rail members 21. In turn, when the support members 31 are in the releasing position (figure 4) and retracted from the lower surface 15 of the base element 11, the second distance 45 between the engagement surfaces 33 and the lower surface 15 is larger than in the offset 29 with which the ball members 27 project beyond the rail supported surface 25. Hence, in the releasing position of the support members 31 the ball members 27 abut on the engagement surfaces 33, whereas there is no contact between the ball members 27 and the engagement surfaces 33 when the support members 31 are in the locking position.

The embodiment of the loading system as shown in figures 2 to 5 comprising a cargo container 9 being provided with a support assembly on the lower surface 15 of its base element 11 and a rail assembly being arranged in the floor 23 of the cabin 5 of an aircraft 1 with the respective rail members 21 being arranged in parallel and with the same spacing as the slots 13 in the base element 11 of the cargo container 9 can be employed as described in the following.

The cargo container 9 is moved into the cabin 5 through a cabin door 47 (see figure 1) and slid along the floor 23 such that the slots 13 are aligned with the rail members 21 being provided with the ball members 27. The actuation member, i.e., the lever 41, is actuated such that it assumes the release position so that due to the coupling of the lever 41 with the rods 35 the support members 31 in the slots 13 are shifted into their releasing positions. Because of the abutment of the ball members 27 with the engagement surfaces 33 on the support members 31 the base element 11 of the cargo container 9 will be lifted from the floor surface, when the actuation member (lever 41) is moved into the release position.

As can be seen in figure 3 in such position there is a gap between the lower surface 15 and the rail support surface 25 on the rail members 21 so that the base element 11 is supported only by the rotatable ball members 27. This allows for the container 9 to be easily slid along the rail members 21. When the final position of the cargo container 9 has been reached by means such sliding movement, the actuation member is positioned in the locked position so that the support members 31 are retracted into the slots 13 with a gap between the ball members 27 and the engagement surfaces 33 of the support members 31. In this position, the base element 11 is supported on the rail support surfaces 25 which on which the lower surface 15 of the base element 11 rests. This prevents the cargo container 9 from being easily moved along the floor surface of the cabin.

Figure 6 shows another embodiment of a support assembly according to the present invention comprising a base member 11 mounted on a cargo support member in the form of palette 49.

In this embodiment of a support assembly the base member assembly comprises a plurality of base elements 11 which are separated from each other and mounted on the palette 49 such that the slots 13 in each of the base elements 11 are arranged in parallel to each other with an identical spacing between adjacent slots 13. Similar to the embodiment described before the base element 11 comprises a slot 13 extending from the lower surface 15 with slidable support members 31 positioned therein. The slidable support members 31 are configured in the same way as in the aforementioned embodiment and may assume releasing and locking positions wherein the support members 31 are also actuated by an actuation rod 35 having first wedge members 37 which engage with corresponding second wedge members on the support members 31. Hence, the actuation assembly comprising actuation rods 35 is also the same as in the aforementioned embodiment. Finally, the rail member 21 positioned in the floor 23 of the passenger cabin 5 of an aircraft is also configured in the same way as in the aforementioned embodiment, i.e., it comprises rotatable ball members 27 which project beyond a rail support surface 25. Thus, it is to be noted that the present invention also encompasses support assemblies comprising a plurality of separate base elements 11.

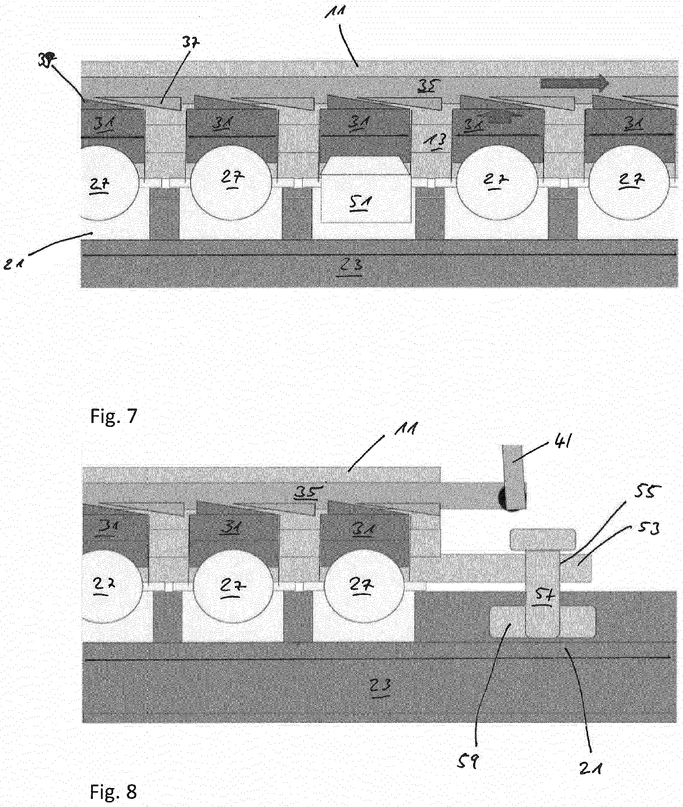

The embodiment shown in figure 7 differs from the first embodiment in that the rail member 21 arranged in the floor 23 comprises a locking projection 51 that projects into a recess in the slot 13 inside the base element 11 of the cargo support member, the recess being formed by a support member 31 when being retracted into the locking position. The engagement of the projection 51 with the recess inside the base element 11 prevents the base element 11 from being slid relative to the rail member 21. However, when the support members 31 are pushed into the releasing position, the base element 11 is lifted from the rail support surface 25 of the rail member 21, so that the projection 51 no longer engages with the re finally, the embodiment shown in figure 8 differs cess and cannot prevent the base element 11 from being easily slid along the rail member 21.

Finally, the embodiment of a support assembly shown in figure 8 differs from the aforementioned embodiment and that it can be seen that a locking projection 53 extends from the base element 11 of a cargo support member, the locking projection having a through hole 55 through which a locking bolt 57 extends and engages with a receiving member 55 fixed to the rail member 21. By means of the locking bolts 57 the base element 11 can be fixed relative to the rail member 21 and, hence, the floor 23. Therefore, this figure shows an alternative to the embodiment shown in figure 7.

The above embodiments of the support assemblies and loading systems, respectively, according to the present invention allows to easily shift cargo support members across the floor 23 of a cabin 5 but also provides for the possibility to lock the cargo support members in place. In addition, it merely requires that roller members are arranged in parallel lines on the floor surface of the passenger cabin 5 of the aircraft 1. Such lines of roller members can easily be mounted in the seat rails 21 present anyway in the passenger cabin 5.

### Reference numerals:

- 1: aircraft
- 3: fuselage
- 5: passenger cabin
- 7: cargo hold
- 9: cargo container
- 11: base element
- 13: slot
- 15: lower surface
- 17: upper surface
- 19: housing
- 21: rail member
- 23: floor (cabin)
- 25: rail support surface
- 27: ball member
- 29: offset
- 31: support member
- 33: engagement surface
- 35: actuation rod
- 37: first wedge member
- 39: second wedge member
- 41: lever
- 43: first distance
- 45: second distance
- 47: cabin door
- 49: palette
- 51: projection
- 53: locking projection
- 55: through hole
- 57: locking bolt
- 59: receiving member

## Claims

1. A support assembly comprising a base member assembly having a support surface (15) adapted to define a common support plane and a plurality of slots (13) wherein each of the slots (13) extends from the support surface (15) into the base member assembly and linearly along a longitudinal axis,
wherein the base member assembly is configured such that the slots (13) of the plurality of slots (13) can be arranged in parallel to each other
wherein in each of the slots (13) at least one support member (31) is slidably mounted which comprises an engagement surface (33) pointing towards the support surface (15) wherein the support member (31) can be moved within the slot (13) between a locking position and a releasing position,
wherein in the releasing position the distance measured perpendicular to the support surface (15) between the engagement surface (33) and the support surface (15) is smaller than in the locking position, and
wherein the base member assembly further comprises an actuation assembly coupled to each of the support members (31) and having an actuation member (41) that can be positioned in a locked position and in a release position, the actuation assembly being configured such that
when the actuation member (41) is positioned in the release position, each of the support members (31) is positioned in the releasing position and
when the actuation member (41) is positioned in the locked position, each of the support members (31) is positioned in the locking position.

2. The support assembly according to claim 1, wherein the actuation assembly comprises a plurality of actuation rods (35) and each of the slots (13) is associated with one of the plurality of actuation rods (35) with said one actuation rod (35) extending parallel to said slot (13) and being movable parallel to said slot (13) between a first and a second position,
wherein each actuation rod (35) is coupled with the at least one support member (31) mounted in the slot (13) associated with said actuation rod (35) such that
when said actuation rod (35) is in the first position, the at least one support member (31) is in the releasing position and
when said actuation rod (35) is in the second position, the at least one support member (31) is in the locking position, and
wherein the actuation assembly is configured such
that each of the plurality of actuation rods (35) is in the first position, when the actuation member (41) is in the release position and
that each of the plurality of actuation rods (35) is in the second position, when the actuation member (41) is in the locked position.

3. The support assembly according to claim 2, wherein each of the actuation rods (35) comprises at least one first wedge member (37),
wherein each support member (31) comprises a second wedge member (39), and
wherein the at least one first wedge member (37) on one of the plurality of actuation rods (35) engages with the at least one second wedge member (39) on the support member (31) mounted in the slot (13) which is associated with said one of the actuation rods (35).

4. The support assembly according to one or more of claims 1 to 3, wherein in each of the plurality of slots (13) a plurality of support members (31) is slidably mounted.

5. The support assembly according to claims 3 and 4, wherein each of the plurality of support members (31) arranged in one of the plurality of slots (13) comprises a second wedge member (39) and
wherein the actuation rod (35) associated with said one of the plurality of slots (13) comprises a plurality of first wedge members (37),
wherein the second wedge member (39) of each of said plurality of support members (31) engages with one of the plurality of first wedge members (37).

6. A base element for a cargo container (9) comprising a support assembly according to one or more of claims 1 to 5, wherein the longitudinal axes of each of the slots (13) are arranged in parallel to each other.

7. A cargo container having a base element according to claim 6, the cargo container (9) further comprising a cargo support surface (17) configured to receive cargo, the cargo support surface (17) being arranged such that it faces away from the support surface (15).

8. A loading system for cargo elements comprising a support assembly according to claim 1 and a rail assembly adapted to be installed in the floor of a passenger cabin (5) of a vehicle, in particular an aircraft (1), the rail assembly comprising a plurality of rail members (21), each of the plurality of rail members (21) extending linearly along a rail member longitudinal axis and comprising a rail support surface (25), wherein the rail members (21) are configured such that they can be arranged adjacent to each other on the floor (3) of the passenger cabin (5) with their rail member longitudinal axes being parallel and the rail support surfaces (25) extending in a common plane,
wherein on each of the plurality of rail members (21) a plurality of roller members (27) is rotatably mounted such that each of the roller members (27) may rotate about an axis that extends perpendicular to the rail member on which said roller member (27) is arranged and parallel to the plane defined by the rail members (21),
wherein on each one of the plurality of rail members (21) the roller members (27) are distributed along the rail member longitudinal axis of said one rail member (21), and
wherein each of the roller members (27) project beyond the rail support surface (25) by an offset (29); and
wherein each of the plurality roller members (27) is configured to engage the engagement surface of the support member (31) of each of the plurality of slots (13) of the base member assembly of the support assembly.

9. The loading system of claim 8, wherein on each one of the plurality of rail members (21) the roller members (27) are, preferably equally, spaced from another along the rail member longitudinal axis of said one rail member (21) and
wherein on each one of the plurality of rail members (21) the roller members (27) project beyond the rail support surface (25) by an offset (29) which is identical for each roller member (27).

10. The loading system of claim 8 or 9, wherein each of the plurality of rail members (21) comprises a fixed locking projection (51) extending beyond the rail support surface (25).

11. The loading system for cargo elements according to any of claims 8 to 10 comprising:
a support assembly according to one or more of claims 1 to 5 arranged on a cargo support member with the longitudinal axis of the slots (13) being arranged in parallel and spaced from each other by a spacing,
and
a rail system according to one or more of claims 8 to 10 with the rail members (21) being arranged adjacent to each other with their longitudinal axes being parallel and the rail support surface (25) extending in a common plane, wherein the rail members (21) are spaced from each other by the spacing.

12. The loading system of claim 11, wherein the cargo support member is formed as a base element (11) for a cargo container (9).

13. The loading system of claim 11, wherein the cargo support member is formed as a cargo container (9) comprising a base element (11) on which the support assembly is mounted.

14. The loading system according to one or more of claims 11 to 13, wherein for each support member (31) in the locking position the distance measured perpendicularly to the support surface (15) between the engagement surface (33) and the support surface (15) is larger than the offset (29) with which each of the roller members (27) projects beyond the rail support surface (25) and
wherein for each support member (31) in the releasing position the distance measured perpendicularly to the support surface (15) between the engagement surface (33) and the support surface (15) is smaller than the offset (29) with which each of the roller members (27) projects beyond the rail support surface (25).

## Patentansprüche

1. Traganordnung, die eine Basiselementanordnung mit einer Tragfläche (15), die dazu ausgelegt ist, eine gemeinsame Tragebene zu definieren, und mehrere Schlitze (13) umfasst, wobei sich jeder der Schlitze (13) von der Tragfläche (15) in die Basiselementanordnung und geradlinig entlang einer Längsachse erstreckt,
wobei die Basiselementanordnung so konfiguriert ist, dass die Schlitze (13) der mehreren Schlitze (13) parallel zueinander angeordnet sein können,
wobei in jedem der Schlitze (13) mindestens ein Tragelement (31) verschiebbar montiert ist, das eine Eingriffsfläche (33) umfasst, die zu der Tragfläche (15) weist, wobei das Tragelement (31) innerhalb des Schlitzes (13) zwischen einer Verriegelungsposition und einer Freigabeposition bewegt werden kann,
wobei in der Freigabeposition der Abstand, der senkrecht zu der Tragfläche (15) zwischen der Eingriffsfläche (33) und der Tragfläche (15) gemessen wird, kleiner als in der Verriegelungsposition ist, und
wobei die Basiselementanordnung ferner eine Betätigungsanordnung umfasst, die mit jedem der Tragelemente (31) gekoppelt ist und ein Betätigungselement (41) aufweist, das in einer verriegelten Position und in einer Freigabeposition positioniert werden kann, wobei die Betätigungsanordnung so konfiguriert ist, dass dann,
wenn das Betätigungselement (41) in der Freigabeposition positioniert ist, jedes der Tragelemente (31) in der Freigabeposition positioniert ist, und
wenn das Betätigungselement (41) in der verriegelten Position positioniert ist, jedes der Tragelemente (31) in der Verriegelungsposition positioniert ist.

2. Traganordnung nach Anspruch 1, wobei die Betätigungsanordnung mehrere Betätigungsstäbe (35) umfasst und jeder der Schlitze (13) einem der mehreren Betätigungsstäbe (35) zugeordnet ist, wobei sich der eine Betätigungsstab (35) parallel zu dem Schlitz (13) erstreckt und parallel zu dem Schlitz (13) zwischen einer ersten und einer zweiten Position beweglich ist,
wobei jeder Betätigungsstab (35) mit dem mindestens einen Tragelement (31) gekoppelt ist, das in dem Schlitz (13) montiert ist, der dem Betätigungsstab (35) zugeordnet ist, so dass dann,
wenn sich der Betätigungsstab (35) in der ersten Position befindet, sich das mindestens eine Tragelement (31) in der Freigabeposition befindet, und
wenn sich der Betätigungsstab (35) in der zweiten Position befindet, sich das mindestens eine Tragelement (31) in der Verriegelungsposition befindet, und
wobei die Betätigungsbaugruppe so konfiguriert ist,
dass sich jeder der mehreren Betätigungsstäbe (35) in der ersten Position befindet, wenn sich das Betätigungselement (41) in der Freigabeposition befindet, und
dass sich jeder der mehreren Betätigungsstäbe (35) in der zweiten Position befindet, wenn sich das Betätigungselement (41) in der verriegelten Position befindet.

3. Traganordnung nach Anspruch 2, wobei jeder der Betätigungsstäbe (35) mindestens ein erstes Keilelement (37) umfasst,
wobei jedes Tragelement (31) ein zweites Keilelement (39) umfasst, und
wobei das mindestens eine erste Keilelement (37) an einem der mehreren Betätigungsstäbe (35) mit dem mindestens einen zweiten Keilelement (39) an dem Tragelement (31), das in dem Schlitz (13) montiert ist, der dem einen der Betätigungsstäbe (35) zugeordnet ist, in Eingriff steht.

4. Traganordnung nach einem oder mehreren der Ansprüche 1 bis 3, wobei in jedem der mehreren Schlitze (13) mehrere Tragelemente (31) verschiebbar montiert sind.

5. Traganordnung nach Anspruch 3 und 4, wobei jedes der mehreren Tragelemente (31), die in einem der mehreren Schlitze (13) angeordnet sind, ein zweites Keilelement (39) umfasst und
wobei der Betätigungsstab (35), der dem einen der mehreren Schlitze (13) zugeordnet ist, mehrere erste Keilelemente (37) umfasst,
wobei das zweite Keilelement (39) jedes der mehreren Tragelemente (31) mit einem der mehreren ersten Keilelemente (37) in Eingriff steht.

6. Basiselement für einen Frachtcontainer (9), umfassend eine Traganordnung nach einem oder mehreren der Ansprüche 1 bis 5, wobei die Längsachsen jedes der Schlitze (13) parallel zueinander angeordnet sind.

7. Frachtcontainer mit einem Basiselement nach Anspruch 6, wobei der Frachtcontainer (9) ferner eine Frachttragfläche (17) umfasst, die dazu ausgelegt ist, Fracht aufzunehmen, wobei die Frachttragfläche (17) so angeordnet ist, dass sie von der Tragfläche (15) weg weist.

8. Ladesystem für Frachtelemente, das eine Traganordnung nach Anspruch 1 und eine Schienenanordnung, die dazu ausgelegt ist, in dem Boden einer Passagierkabine (5) eines Fahrzeugs, insbesondere eines Luftfahrzeugs (1), installiert zu werden, umfasst, wobei die Schienenanordnung mehrere Schienenelemente (21) umfasst, wobei sich jedes der mehreren Schienenelemente (21) geradlinig entlang einer Schienenelementlängsachse erstreckt und eine Schienentragfläche (25) umfasst, wobei die Schienenelemente (21) so konfiguriert sind, dass sie nebeneinander auf dem Boden (3) der Fahrgastkabine (5) angeordnet werden können, wobei ihre Schienenelementlängsachsen parallel sind und sich die Schienentragflächen (25) in einer gemeinsamen Ebene erstrecken,
wobei an jedem der mehreren Schienenelemente (21) mehrere Rollenelemente (27) drehbar montiert sind, so dass sich jedes der Rollenelemente (27) um eine Achse drehen kann, die sich senkrecht zu dem Schienenelement, auf dem das Rollenelement (27) angeordnet ist, und parallel zu der durch die Schienenelemente (21) definierten Ebene erstreckt,
wobei an jedem der mehreren Schienenelemente (21) die Rollenelemente (27) entlang der Schienenelementlängsachse des einen Schienenelements (21) verteilt sind, und
wobei jedes der Rollenelemente (27) um einen Versatz (29) über die Schienentragfläche (25) hinaus vorsteht; und
wobei jedes der mehreren Rollenelemente (27) dazu ausgelegt ist, mit der Eingriffsfläche des Tragelements (31) jedes der mehreren Schlitze (13) der Basiselementanordnung der Traganordnung in Eingriff zu treten.

9. Ladesystem nach Anspruch 8, wobei an jedem der mehreren Schienenelemente (21) die Rollenelemente (27) vorzugsweise gleichmäßig entlang der Schienenelementlängsachse des einen Schienenelements (21) voneinander beabstandet sind und
wobei an jedem der mehreren Schienenelemente (21) die Rollenelemente (27) um einen Versatz (29), der für jedes Rollenelement (27) identisch ist, über die Schienentragfläche (25) vorstehen.

10. Ladesystem nach Anspruch 8 oder 9, wobei jedes der mehreren Schienenelemente (21) einen festen Verriegelungsvorsprung (51) umfasst, der sich über die Schienentragfläche (25) hinaus erstreckt.

11. Ladesystem für Frachtelemente nach einem der Ansprüche 8 bis 10, das Folgendes umfasst:
eine Traganordnung nach einem oder mehreren der Ansprüche 1 bis 5, die auf einem Frachttragelement angeordnet ist, wobei die Längsachsen der Schlitze (13) parallel und um einen Abstand voneinander beabstandet angeordnet sind,
und
ein Schienensystem nach einem oder mehreren der Ansprüche 8 bis 10, wobei die Schienenelemente (21) parallel nebeneinander angeordnet sind, wobei ihre Längsachsen, die parallel sind, und die Schienentragfläche (25) in einer gemeinsamen Ebene verlaufen, wobei die Schienenelemente (21) um den Abstand voneinander beabstandet sind.

12. Ladesystem nach Anspruch 11, wobei das Frachttragelement als ein Basiselement (11) für einen Frachtcontainer (9) ausgebildet ist.

13. Ladesystem nach Anspruch 11, wobei das Frachttragelement als ein Frachtcontainer (9) ausgebildet ist, der ein Basiselement (11) umfasst, an dem die Traganordnung montiert ist.

14. Ladesystem nach einem oder mehreren der Ansprüche 11 bis 13, wobei für jedes Tragelement (31) in der Verriegelungsposition der senkrecht zu der Tragfläche (15) gemessene Abstand zwischen der Eingriffsfläche (33) und der Tragfläche (15) größer ist als der Versatz (29), mit dem jedes der Rollenelemente (27) über die Schienentragfläche (25) vorsteht, und
wobei für jedes Tragelement (31) in der Freigabeposition der senkrecht zu der Tragfläche (15) gemessene Abstand zwischen der Eingriffsfläche (33) und der Tragfläche (15) kleiner ist als der Versatz (29), mit dem jedes der Rollenelemente (27) über die Schienentragfläche (25) vorsteht.

## Revendications

1. Ensemble de support comprenant un ensemble d'élément de base présentant une surface de support (15) conçue pour définir un plan de support commun et une pluralité de fentes (13), chacune des fentes (13) s'étendant depuis la surface de support (15) dans l'ensemble d'élément de base et de manière linéaire selon un axe longitudinal,
dans lequel l'ensemble d'élément de base est configuré de telle sorte que les fentes (13) de la pluralité de fentes (13) puissent être disposées parallèlement les unes aux autres,
dans lequel, dans chacune des fentes (13), au moins un élément de support (31) est monté de manière coulissante, lequel comprend une surface d'engagement (33) orientée vers la surface de support (15), l'élément de support (31) pouvant être déplacé à l'intérieur de la fente (13) entre une position de verrouillage et une position de libération,
dans lequel, dans la position de libération, la distance mesurée perpendiculairement à la surface de support (15) entre la surface d'engagement (33) et la surface de support (15) est inférieure à celle dans la position de verrouillage, et
dans lequel l'ensemble d'élément de base comprend en outre un ensemble d'actionnement couplé à chacun des éléments de support (31) et présentant un élément d'actionnement (41) pouvant être positionné dans une position verrouillée et dans une position de libération, l'ensemble d'actionnement étant configuré de telle sorte que
lorsque l'élément d'actionnement (41) est positionné dans la position de libération, chacun des éléments de support (31) est positionné dans la position de libération, et
lorsque l'élément d'actionnement (41) est positionné dans la position verrouillée, chacun des éléments de support (31) est positionné dans la position de verrouillage.

2. Ensemble de support selon la revendication 1, dans lequel l'ensemble d'actionnement comprend une pluralité de tiges d'actionnement (35), chacune des fentes (13) étant associée à l'une de la pluralité de tiges d'actionnement (35), ladite tige d'actionnement (35) s'étendant parallèlement à ladite fente (13) et étant déplaçable parallèlement à ladite fente (13) entre une première et une deuxième position,
dans lequel chaque tige d'actionnement (35) est couplée à l'au moins un élément de support (31) monté dans la fente (13) associée à ladite tige d'actionnement (35), de telle sorte que
lorsque ladite tige d'actionnement (35) est dans la première position, l'au moins un élément de support (31) est dans la position de libération, et
lorsque ladite tige d'actionnement (35) est dans la deuxième position, l'au moins un élément de support (31) est dans la position de verrouillage, et
dans lequel l'ensemble d'actionnement est configuré de telle sorte
que chacune de la pluralité de tiges d'actionnement (35) est dans la première position lorsque l'élément d'actionnement (41) est dans la position de libération, et
que chacune de la pluralité de tiges d'actionnement (35) est dans la deuxième position lorsque l'élément d'actionnement (41) est dans la position verrouillée.

3. Ensemble de support selon la revendication 2, dans lequel chacune des tiges d'actionnement (35) comprend au moins un premier élément en coin (37),
dans lequel chaque élément de support (31) comprend un deuxième élément en coin (39), et
dans lequel ledit au moins un premier élément en coin (37) sur l'une de la pluralité de tiges d'actionnement (35) est en prise avec l'au moins un deuxième élément en coin (39) sur l'élément de support (31) monté dans la fente (13) qui est associée à ladite des tiges d'actionnement (35).

4. Ensemble de support selon une ou plusieurs des revendications 1 à 3, dans lequel, dans chacune de la pluralité de fentes (13), une pluralité d'éléments de support (31) est montée de manière coulissante.

5. Ensemble de support selon les revendications 3 et 4, dans lequel chacun de la pluralité d'éléments de support (31) disposés dans l'une de la pluralité de fentes (13) comprend un deuxième élément en coin (39), et
dans lequel la tige d'actionnement (35) associée à ladite fente de la pluralité de fentes (13) comprend une pluralité de premiers éléments en coin (37),
dans lequel le deuxième élément en coin (39) de chacun de ladite pluralité d'éléments de support (31) est en prise avec l'un de la pluralité de premiers éléments en coin (37).

6. Élément de base pour un conteneur de fret (9) comprenant un ensemble de support selon une ou plusieurs des revendications 1 à 5, dans lequel les axes longitudinaux de chacune des fentes (13) sont disposés parallèlement les uns aux autres.

7. Conteneur de fret comprenant un élément de base selon la revendication 6, le conteneur de fret (9) comprenant en outre une surface de support de fret (17) configurée pour recevoir un fret, la surface de support de fret (17) étant disposée de telle sorte qu'elle soit orientée à l'opposé de la surface de support (15).

8. Système de chargement pour éléments de fret comprenant un ensemble de support selon la revendication 1 et un ensemble de rails conçu pour être installé dans le plancher d'une cabine passagers (5) d'un véhicule, notamment d'un aéronef (1), l'ensemble de rails comprenant une pluralité d'éléments rails (21), chacun de la pluralité d'éléments rails (21) s'étendant de manière linéaire selon un axe longitudinal d'élément rail et comprenant une surface de support de rail (25), les éléments rails (21) étant configurés de telle sorte qu'ils puissent être disposés adjacents les uns aux autres sur le plancher (3) de la cabine passagers (5), leurs axes longitudinaux d'élément rail étant parallèles et les surfaces de support de rail (25) s'étendant dans un plan commun,
dans lequel, sur chacun de la pluralité d'éléments rails (21), une pluralité d'éléments rouleaux (27) est montée de manière rotative de telle sorte que chacun des éléments rouleaux (27) puisse tourner autour d'un axe qui s'étend perpendiculairement à l'élément rail sur lequel ledit élément rouleau (27) est disposé et parallèlement au plan défini par les éléments rails (21),
dans lequel, sur chacun de la pluralité d'éléments rails (21), les éléments rouleaux (27) sont répartis le long de l'axe longitudinal d'élément rail dudit élément rail (21), et
dans lequel chacun des éléments rouleaux (27) fait saillie au-delà de la surface de support de rail (25) d'un décalage (29) ; et
dans lequel chacun de la pluralité d'éléments rouleaux (27) est configuré pour être en prise avec la surface d'engagement de l'élément de support (31) de chacune de la pluralité de fentes (13) de l'ensemble d'élément de base de l'ensemble de support.

9. Système de chargement selon la revendication 8, dans lequel, sur chacun de la pluralité d'éléments rails (21), les éléments rouleaux (27) sont espacés, de préférence de manière égale, les uns des autres le long de l'axe longitudinal d'élément rail dudit élément rail (21), et dans lequel, sur chacun de la pluralité d'éléments rails (21), les éléments rouleaux (27) font saillie au-delà de la surface de support de rail (25) d'un décalage (29) identique pour chaque élément rouleau (27).

10. Système de chargement selon la revendication 8 ou 9, dans lequel chacun de la pluralité d'éléments rails (21) comprend une saillie de verrouillage fixe (51) s'étendant au-delà de la surface de support de rail (25).

11. Système de chargement pour éléments de fret selon l'une quelconque des revendications 8 à 10, comprenant :
un ensemble de support selon une ou plusieurs des revendications 1 à 5 disposé sur un élément de support de fret, les axes longitudinaux des fentes (13) étant disposés parallèlement et espacés les uns des autres d'un espacement,
et
un système de rails selon une ou plusieurs des revendications 8 à 10, les éléments rails (21) étant disposés adjacents les uns aux autres, leurs axes longitudinaux étant parallèles et les surfaces de support de rail (25) s'étendant dans un plan commun, les éléments rails (21) étant espacés les uns des autres de l'espacement.

12. Système de chargement selon la revendication 11, dans lequel l'élément de support de fret est formé comme un élément de base (11) pour un conteneur de fret (9).

13. Système de chargement selon la revendication 11, dans lequel l'élément de support de fret est formé comme un conteneur de fret (9) comprenant un élément de base (11) sur lequel l'ensemble de support est monté.

14. Système de chargement selon une ou plusieurs des revendications 11 à 13, dans lequel, pour chaque élément de support (31) dans la position de verrouillage, la distance mesurée perpendiculairement à la surface de support (15) entre la surface d'engagement (33) et la surface de support (15) est supérieure au décalage (29) dont chacun des éléments rouleaux (27) fait saillie au-delà de la surface de support de rail (25), et
dans lequel, pour chaque élément de support (31) dans la position de libération, la distance mesurée perpendiculairement à la surface de support (15) entre la surface d'engagement (33) et la surface de support (15) est inférieure au décalage (29) dont chacun des éléments rouleaux (27) fait saillie au-delà de la surface de support de rail (25).
